# EUROPEAN PATENT APPLICATION

(11) **EP 4 657 626 A1**
(43) Date of publication of application: **03.12.2025**
(21) Application number: 24179300.9
(22) Date of filing: 31.05.2024
(51) Int. Cl.: H01M 50/209, H01M 50/249, H01M 50/271, H01M 50/244, B60K 1/04

(54) **BATTERY SYSTEM FOR VEHICLE**

(71) Applicant: VOLVO TRUCK CORPORATION, 405 08 Göteborg (SE)
(72) Inventor: SILLBERG, Ulf, 444 61 Stora Höga (SE)
(74) Representative: Ström & Gulliksson AB

(57) **Abstract**

Battery system for a vehicle, the battery system comprising a housing and at least one battery module, wherein the housing is adapted to house the at least one battery module, wherein the housing comprises a first housing part adapted to be mounted to a frame of the vehicle, and a second housing part releasably mountable to the first housing part to house the at least one battery module,

## Description

### TECHNICAL FIELD

The disclosure relates generally to battery systems. In particular aspects, the disclosure relates to battery systems for vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Within the field of vehicles in general and in particular electrically propelled vehicles, batteries modules consisting of multiple cells are commonly stacked together in a housing to form a battery system of a vehicle. The battery modules are heavy and difficult to handle for an operator in the manufacturing of the vehicle and a service operator looking to service the battery system.

Further, in many cases, the battery modules are required to be arranged by a housing in order to protect the battery modules from tampering, moisture etc. The housing may add further complexity to the mounting and dismounting of the battery modules to the vehicle.

### SUMMARY

According to a first aspect of the disclosure, a battery system for a vehicle is provided. The battery system comprises a housing and at least one battery module, wherein the housing is adapted to house the at least one battery module, wherein the housing comprises a first housing part adapted to be mounted to a frame of the vehicle, and a second housing part releasably mountable to the first housing part to house the at least one battery module. The at least one battery module is mounted to said second housing part and the first housing part is adapted to be mounted to the frame such that the at least one battery module is mountable to the frame by mounting of said second housing part to said first housing part and the second housing part is dismountable from the first housing part together with the at least one battery module without dismounting of the first housing part from the frame. The first aspect of the disclosure may seek to achieve a battery system allowing for simple and time efficient mounting and dismounting to a frame of a vehicle. A technical benefit may include that the battery modules can be mounted and dismounted by the simple operation of mounting and dismounting of the first and second housing part to/from each other.

Optionally in some examples, including in at least one preferred example, the second housing part may form a bottom part of the housing, whereby the at least one battery module may be arranged on top of said bottom part. A technical benefit may include that the at least one battery modules are supported during mounting to the second housing part, further allowing a more simplified mounting and/or dismounting.

Optionally in some examples, including in at least one preferred example, the at least one battery module may be dismountable from the frame by dismounting of the second housing part from the first housing part and lowering of the second housing part together with the at least one battery module relative to the first housing part. A technical benefit may include that the dismounting of the second housing part may be achieved in a simple and user-friendly manner.

Optionally in some examples, including in at least one preferred example, the at least one battery module may be mounted to the housing solely by means of being mounted to the second housing part. A technical benefit may include that the battery modules may be mounted to the housing in a more simple, time-efficient and user friendly manner. Another technical benefit may include that replacement of a battery module may be performed faster and in a less complex manner.

Optionally in some examples, including in at least one preferred example, the first housing part may be mounted to an upper surface of the second housing part. A technical benefit may include that the mounting of the first housing part to the second housing part may be less complex and less cumbersome for an operator as the first housing part may be arranged on top of the second housing part during mounting.

Optionally in some examples, including in at least one preferred example, the first housing part may comprise a housing mounting interface adapted to be releasably mounted to the second housing part and a frame mounting interface adapted to be releasably mounted to the frame. A technical benefit may include that the first housing part may be adapted such that it can be mountable and/or dismountable from the frame independently from being mountable and/or dismountable from the second housing part.

Optionally in some examples, including in at least one preferred example, the frame mounting interface may be arranged to be accessible from the exterior of the housing such that the first housing part may be releasably mountable to the vehicle frame from an external side of the housing. A technical benefit may include that the first housing part may be dismountable and/or mountable to the frame even without the second housing part being mounted to the first housing part or requiring the second housing part to be dismounted from the first housing part, allowing for a simpler and more time-efficient mounting and/or dismounting of the battery system to the frame.

Optionally in some examples, including in at least one preferred example, the housing mounting interface may be provided on a first surface of the first housing part forming one side of the first housing part and the frame mounting interface may be provided on a second surface of the first housing part forming another side of the first housing part. A technical benefit may include that the first housing part may be adapted such that it can be mountable and/or dismountable from the frame independently from being mountable and/or dismountable from the second housing part.

Optionally in some examples, including in at least one preferred example, the housing may comprise an interface for electrical connections and/or cooling fluid connections. A technical benefit may include that the at least one battery module may be connected to the cooling system and/or power system of the vehicle in a simple and time-efficient manner.

Optionally in some examples, including in at least one preferred example, the first or second housing cover part may comprise a cover portion for selectively enabling access to the at least one battery module through the housing. A technical benefit may include that the cover may enable service and maintenance of components arranged in the interior of the housing, such as the at least one battery module, without requiring dismounting of the second housing part from the first housing part.

Optionally in some examples, including in at least one preferred example, the second housing part optionally may form a bottom part of the housing, optionally the at least one battery module may be arranged on top of said bottom part, optionally, the at least one battery module may be dismountable from the frame by dismounting of the second housing part from the first housing part and lowering of the second housing part together with the at least one battery module relative to the first housing part, optionally the at least one battery module may be mounted to the housing solely by means of being mounted to the second housing part, optionally, the first housing part may be mounted to an upper surface of the second housing part, and, optionally, the battery system may comprise a plurality of battery modules stacked on each other along a stacking axis.

According to a second aspect of the disclosure, a vehicle is provided. The vehicle comprises the battery system of any of the examples described herein. The second aspect of the disclosure may seek to achieve a vehicle with a battery system allowing for a more simple and time efficient mounting and dismounting. A technical benefit may include that the battery modules can be mounted and dismounted by the simple operation of mounting and dismounting of the first and second housing part to/from each other.

Optionally in some examples, including in at least one preferred example, the vehicle may be a heavy-duty vehicle such as a commercial vehicle or a construction vehicle. A technical benefit may include that the battery modules for such a vehicle commonly are heavy and difficult to handle, whereby the battery system of the present disclosure may allow for a simpler and more efficient mounting and dismounting of such heavy battery modules.

Optionally in some examples, including in at least one preferred example, the vehicle may comprise an electric propulsion source and the at least one battery module may be configured to power the electric propulsion source. A technical benefit may include that the battery modules for propulsion often are heavy and difficult to handle, whereby the battery system of the present disclosure may allow for a simpler and more efficient mounting and dismounting.

According to a third aspect of the disclosure, a method for mounting the battery system of any of the examples provided herein to a frame of a vehicle is provided. The method comprises mounting the first housing part to the frame, mounting the at least one battery module to the second housing part and mounting the second housing part to the first housing part after the mounting of the at least one battery module to the second housing part. The third aspect of the disclosure may seek to achieve a method for mounting a battery system to a vehicle that is simple and time efficient. A technical benefit may include that the battery modules can be mounted by the simple operation of mounting the first and second housing part to each other.

Optionally in some examples, including in at least one preferred example, the method may comprise mounting the first housing part to the second housing part to form the housing and mounting the housing to the frame by mounting the first housing part to the frame. A technical benefit may include that a more time efficient and simple operation of mounting a battery system to a frame of a vehicle may be achieved.

Optionally in some examples, including in at least one preferred example, the method may comprise positioning the first housing part above and aligned with the second housing part and mounting the first housing part to the second housing part by moving the first housing part downwards to abut to the second housing part. A technical benefit may include that a simple and intuitive mounting of the first housing part to the second housing part may be achieved.

Optionally in some examples, including in at least one preferred example, the method may further comprise mounting the first housing part to the frame prior to mounting the second housing part to the first housing part and mounting the second housing part to the first housing part as the first housing part is mounted to the frame to form the housing. A technical benefit may include that for example service and maintenance of the at least one battery module may be performed in a simple and time-efficient manner.

Optionally in some examples, including in at least one preferred example, the method may further comprise positioning the second housing part underneath and aligned with the first housing part and mounting the second housing part to the first housing part by moving the second housing part upwards to abut to the first housing part. A technical benefit may include that the at least one battery module may be mounted to a frame of a vehicle in a simple and time-efficient manner.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle comprising a battery system according to an example.
**FIG. 2** is a perspective view of a battery system according to an example.
**FIG. 3A** is a perspective exploded view of the battery system of **FIG. 2**according to an example.
**FIG. 3B** is a cross-section view of the battery system of **FIG. 3A****.**
**FIG. 4A** is a perspective exploded view of the battery system of **FIG. 2** according to an example.
**FIG. 4B** is a cross-section view of the battery system of **FIG. 4A****.**
**FIG. 5** is a perspective view of the battery system of **FIG. 2** according to an example.
**FIG. 6** is a perspective view of the battery system of **FIG. 2** according to an example.
**FIG. 7** is a flow chart of a method for mounting a battery system to a frame of the vehicle according to an example.
**FIG. 8** is a flow chart of the method of **FIG. 7** according to a more detailed example.
**FIG. 9** is a flow chart of the method of **FIG. 7** according to another more detailed example.
**FIG. 10** is another view of **FIG. 1****,** according to an example.

### DETAILED DESCRIPTION

The detailed description set forth below provides information and examples of the disclosed technology with sufficient detail to enable those skilled in the art to practice the disclosure.

Electrically propelled vehicles, i.e. vehicles that are propelled by means of an electrical motor commonly require energy storage units in the form of batteries to power the electrical motor. The batteries are associated with challenges as they are heavy and space consuming and requires particular mounting systems for mounting the batteries to the vehicle.

Battery systems commonly include a mounting structure to be mounted to a chassis of the vehicle. In order to shield the batteries from the outside environment, provide structural stability and crash safety, the battery system commonly includes a housing in which the batteries may be arranged. A challenge with the existing solutions is that they require complex, cumbersome and time-consuming mounting to the vehicle.

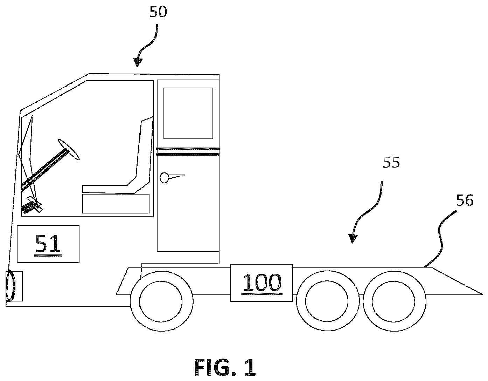

**FIG. 1** is an exemplary vehicle **50** comprising a battery system **100** according to an example. In the depicted example, the vehicle **50** is a truck but it may be envisioned that the vehicle may be any type of vehicle. Preferably, the vehicle may be a heavy-duty vehicle, such as commercial vehicle such as a truck or bus or construction equipment such as a construction vehicle, among other vehicle types. It may also be envisioned that the battery system **100** is utilized for a marine vessel such as a boat or a motor and preferably an electrical motor configured to be powered by the battery modules to be mounted in the mounting system. It may also be envisioned that the battery system **100** may be utilized for a stationary system such as a building and/or a stationary machinery. Accordingly, the battery system may be for a vehicle **50,** marine vessel, motor or a stationary system including a building and/or a stationary machinery. The battery system **100** may be for an energy storage system of such a vehicle **50,** marine vessel, motor or stationary system.

The vehicle **50** may comprise an electric propulsion source **51.** The electric propulsion source **51** may be configured to propel the vehicle **50.** The electric propulsion source **51** may be in the form of an electric motor. As will be explained in further detail, the battery system **100** may comprise at least one battery module. The battery system **100** may be configured to power the electric propulsion source **51.** Preferably, the at least one battery module of the battery system **100** may be configured to power the electric propulsion source **51.**

The vehicle **50** may comprise a chassis **55** and the battery system **100** may be adapted to be mounted to said chassis **55.** In the depicted example, the chassis **55** may comprise a frame **56.** Advantageously, the battery system **100** may be adapted to be mounted to said frame **56.**

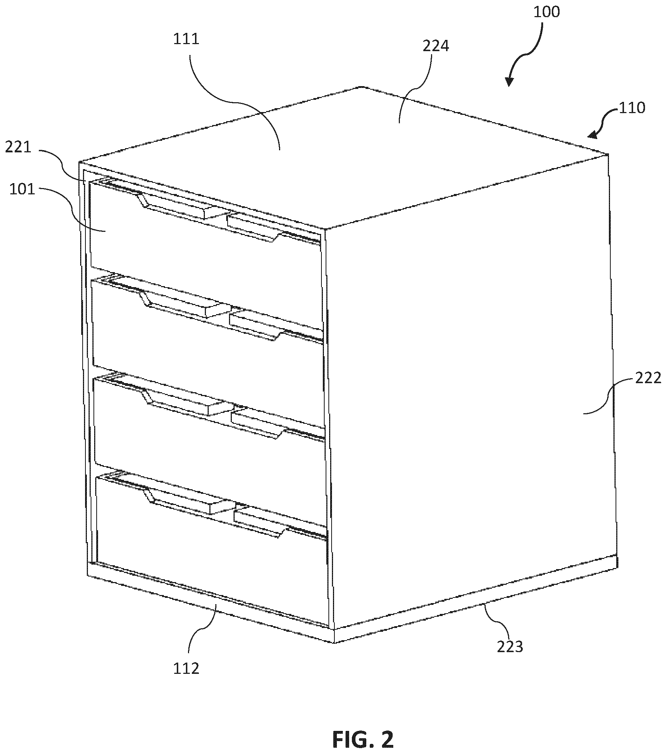

**FIG. 2** depicts the battery system **100** in further detail. The battery system **100** is for the vehicle **50.** The battery system **100** may comprise at least one battery module **101.** The design and functionality of battery modules are well-known for the skilled person and will not be described in lengthy detail. It may however be envisioned that each battery module **101** comprises one or more battery cells and electrical connections for connecting the battery module **101** to an electrical consumer of the vehicle **50.** In one example, the at least one battery module **101** may be configured to power the electrical propulsion source **51** of the vehicle **50.** Hence, the electrical consumer may be the electrical propulsion source **51** of the vehicle **50.** It may also be envisioned that the at least one battery module **101** is configured to power a plurality of consumers including the electrical propulsion source **51** and electrically powered auxiliaries.

The battery system **100** may comprise a housing **110.** The housing **110** is adapted to house the at least one battery module **101.** In one example, the housing **110** may be configured to encapsulate the at least one battery module **101.** In one example, the housing **110** may be configured to provide a water-tight encapsulation of the at least one battery module **101.**

The housing **110** may be configured to accommodate the at least one battery module **101.** The housing **110** may form a container for the at least one battery module **101.** In the depicted example, the housing **110** forms a first side wall **221** and a second side wall **222.** The second side wall **222** may be arranged opposite to the first side wall **221.** The at least one battery module **101** may be arranged between the first side wall **221** and the second side wall **222.**

In one example, the housing **110** may comprise a third side wall **223** and a fourth side wall **224.** The third side wall **223** and the fourth side wall **224** may be arranged substantially perpendicular to the first side wall **221** and the second side wall **222.** The third side wall **223** and the fourth side wall **224** may be connected to the first side wall **221** and the second side wall **222.** The fourth side wall **224** may be arranged opposite to the third side wall **223.** The third side wall **223** and the fourth side wall **224** may extend substantially parallel to the at least one battery module **101.** The first, second, third and fourth side wall may together form a rectangular structure. Although the housing is depicted as a rectangular housing, the housing may depending on the requirements of the implementation be in any suitable shape and preferably in a shape allowing it to provide sufficient protection for the at least one battery module **101.**

In one example, the housing **110** may comprise a front surface with a front cover. In one example, the housing **110** may comprise a rear surface. The front and rear surface will be described in further detail with reference to subsequent figures.

Further referencing **FIG. 1****,** the housing **110** comprises a first housing part **111** and a second housing part **112.**

The first housing part **111** is adapted to be mounted to the frame **56** of the vehicle **50.** The first housing part **111** may be adapted to be releasably mounted to the frame **56** of the vehicle **50.**

The second housing part **112** is releasably mountable to the first housing part **111** to house the at least one battery module **101.** Thus, the first housing part **111** and the second housing part **112** may be configured such that they together form the housing **110** of the battery system **100.**

The at least one battery module **101** is mounted to the second housing part **112** and the first housing part **111** is adapted to be mounted to the frame **56** such that the at least one battery module **101** is mountable to the frame **56** by mounting of the second housing part **112** to the first housing part **111.** The at least one battery module **101** is mounted to the second housing part **112** and the first housing part **111** is adapted to be mounted to the frame **56** such that the second housing part **112** is dismountable from the first housing part **111** together with the at least one battery module **101** without dismounting of the first housing part **111** from the frame **56.** Mountable and dismountable may herein refer to that a component can be mounted and dismounted, e.g. repeatedly mounted and removed, respectively.

As will be described in further detail with reference to the subsequent figures, the at least one battery module **101** may be mountable to the frame **56** by means of the second housing part **112** being mounted to the first housing part **111** when said first housing part **111** is already mounted on the frame **56** or by means of the second housing part **112** with the at least one battery module **101** mounted thereon being mounted to the first housing part **111** and the first housing part **111** thereafter being mounted to the frame **56.**

In the depicted example, the first housing part **111** may form the first side wall **221,** the second side wall **222** and the fourth side wall **224.** In the depicted example, the second housing part **112** may form the third side wall **223.**

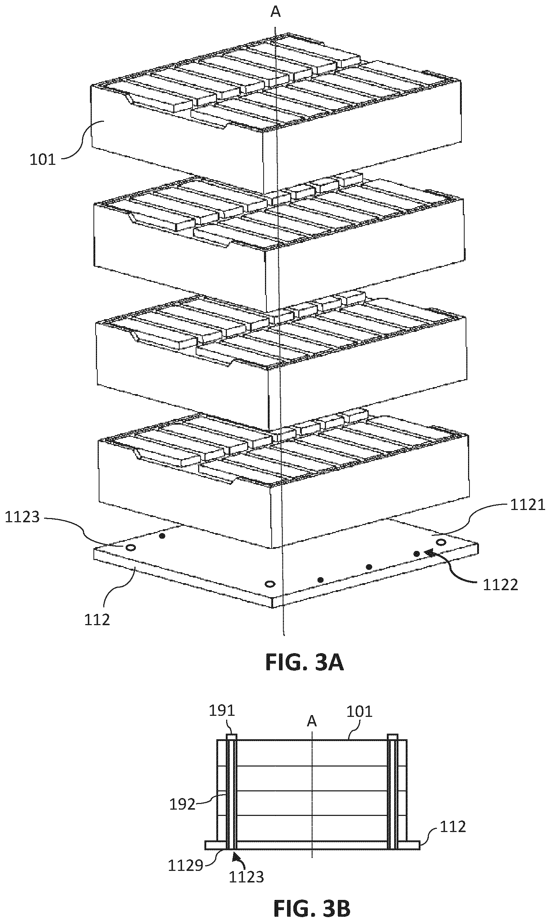

**FIG. 3A** depicts aspects of the battery system **100** of **FIG. 2** and in particular the mounting of the at least one battery module **101** to the second housing part **112.** In the depicted example, the at least one battery module **101** may comprise a plurality of battery modules **101.** The battery modules **101** may be arranged in a stack. Thus, the plurality of battery modules **101** may be stacked on each other along a stacking axis **A.** The stacking axis **A** may for example be vertical or horizontal. In one example, the plurality of battery modules are stacked on top of each other along a vertical stacking axis **A.** In one example, the plurality of battery modules **101** may be stacked side-by-side along a horizontal stacking axis **A.**

Referencing **FIG. 3A****,** the second housing part **112** may form a bottom part of the housing **110.** The at least one battery module **101** may be arranged on top of the bottom part **112.** The at least one battery module **101** may be arranged on top of the second housing part **112.** In an example, the second housing part **112** may form the third side wall **223** described with reference to **FIG. 2****.**

In an example, the second housing part **112** may be formed by a plate adapted to extend horizontally, e.g. horizontally relative to the frame **56,** e.g. may be arranged to extend horizontally relative to the frame **56** upon the battery system **100** being mounted to said frame **56.** In an example, the first housing part **111** may form the remainder of the housing **110.**

In an example, the least one battery module **101** may be mounted to housing **110** solely by means of being mounted to the second housing part **112.** The at least one battery module **101** may only be fixed in position by fixation points relative to the second housing part **112.**

Further referencing **FIG. 3A****,** the second housing part **112** may comprise a battery mounting interface **1123.** The at least one battery module **101** may be adapted to be mounted to said battery mounting interface **1123.** As the skilled person recognizes, a battery mounting interface **1123** may be provided to enable mounting of the at least one battery module **101** with any type of conventional suitable mounting arrangement. For example, the battery mounting interface **1123** may comprise a fixture or bracket for receiving the at least one battery module **101** or holes or recesses for receiving fastening members for mounting the battery module **101** to the second housing part **112.**

**FIG. 3B** schematically depicts aspects of the mounting of the at least one battery module **101** to the second housing part **112** according to an example. In the depicted example, the mounting interface **1123** comprises one or more holes **1129** adapted to receive fastening members **191** for mounting the at least one battery module **101** to the second housing part **122.** In the depicted example, the at least one battery module **101** may be provided with corresponding holes **192** extending through the at least one battery module **101** such that elongated fastening members may extend through the at least one battery module **101** and into the holes **1129** of the battery mounting interface **1123.** In the depicted example, the battery modules **101** are arranged in a stack, whereby each of the battery modules **101** are provided with holes **192** aligned to enable insertion of the elongated fastening member **191** through each of the stack of battery modules **101** and through the hole **1129** of the battery mounting interface **1123.** Preferably, the holes of the battery modules **101** and the battery mounting interface **1123** may be threaded holes and the elongated fastening members **191** may be threaded fastening members such as for example screws or bolts.

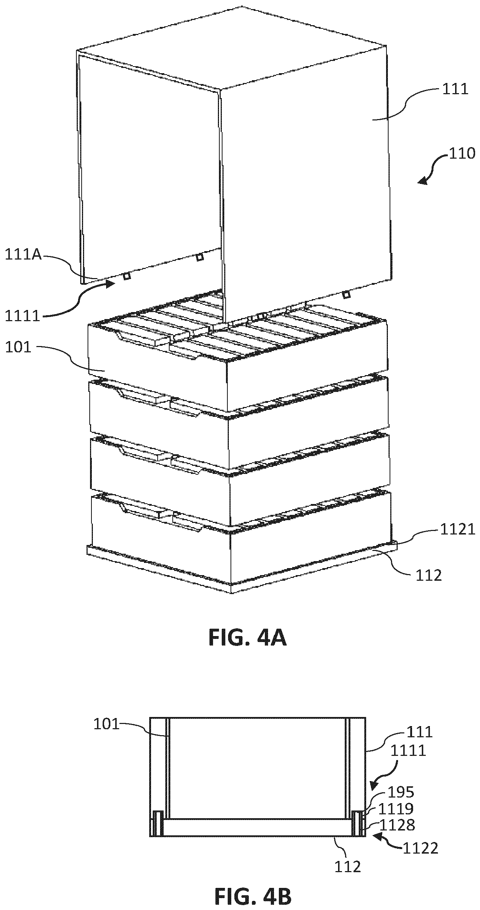

**FIG. 4A** depicts aspects of the battery system **100** of **FIG. 2** and in particular the mounting of the first housing part **111** to the second housing part **112.**

Referencing **FIG. 4A****,** the first housing part **111** may be mounted to an upper surface **1121** of the second housing part **112.** In an example, the second housing part **112** may comprise a plate member forming the bottom surface of the housing **110.** The upper surface **1121** may thus be an upper surface of the plate member. The upper surface **1121** may be considered an upper surface relative to the frame **56** upon the battery system **100** being mounted to said frame **56.** The upper surface **1121** may be considered a surface of the second housing part **112** facing the at least one battery module **101** and/or the first housing part **111.**

The first housing part **111** may comprise a housing mounting interface **1111.** The housing mounting interface **1111** may be adapted to be releasably mounted to the second housing part **112.** As will be further described with reference to subsequent figures, the first housing part **111** may comprise additional interfaces, for example in the form of a frame mounting interface adapted to be releasably mounted to the frame **56** of the vehicle **50.**

A bottom surface, and preferably a horizontally extending bottom surface of the first housing part **111** may abut to the second housing part **112** and preferably to the upper surface **1121.** In the depicted example, the first housing part **111** may comprise one or more side walls extending orthogonally to the second housing part **112** and configured to be mounted to said second housing part **112.** Preferably, the first housing part **111** may be provided as an open-ended box adapted to be mounted on top of the second housing part **112** to form the housing **110.** The second housing part **112** may thus form the bottom of the housing **110.** In **FIG. 4A****,** one of the side walls of the first housing part **111** is removed to show the at least one battery module **101.**

The side walls of the first housing part **111** may be adapted to extend in a first plane extending substantially parallel to the extension of the frame **56.** The second housing part **112** may be adapted to extend in a second plane extending substantially parallel to the extension of the frame **56** and orthogonally to the first plane.

In the depicted example, the first housing part **111** may further comprise an upper wall extending substantially parallel and opposite to the bottom of the housing **110** formed by the second housing portion **112.** The upper wall may extend in a third plane substantially parallel to the second plane.

In one example, it may be envisioned that the second housing part comprises one or more support points for attachment to the vehicle **50** in order to further support the weight of the battery system **100.** For example, the one or more support points may be adapted to be attached to the frame **56.**

**FIG. 4B** schematically depicts aspects of the mounting of the first housing part **111** to the second housing part **112** according to an example. In the depicted example, the housing mounting interface **1111** comprises one or more holes **1119** adapted to receive fastening elements **195** for mounting the first housing part **111** to the second housing part **112.**

The second housing part **112** may comprise a second housing part mounting interface **1122.** The second housing mounting interface **1122** may be adapted to be mounted to the first housing part **111.** The housing mounting interface **1111** may be adapted to be mounted to the second housing part mounting interface **1122.**

In the depicted example, the second housing part mounting interface **1122** may comprise corresponding holes **1128** extending through the second housing part **112** such that the fastening elements **195** may extend through the second housing part **112** and into the holes **1119** of the housing mounting interface **1111.**

Preferably, the holes **1128** of the second housing part mounting interface **1122** and the holes **1119** of the housing mounting interface **1111** may be threaded holes and the fastening elements **195** may be threaded fastening elements **195** such as for example screws or bolts.

It may however be envisioned that the connection and mounting of the first to the second housing part may be performed in a multitude of ways, readily available for the skilled person.

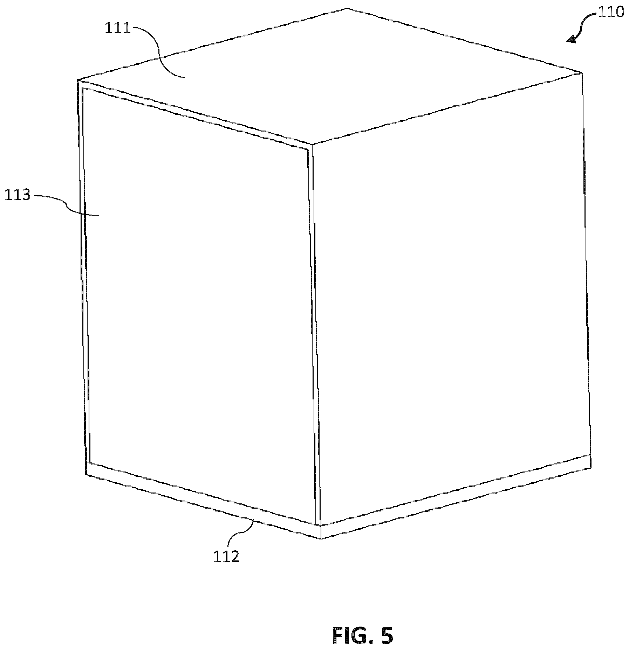

**FIG. 5** depicts additional aspects of the battery system **100** of **FIG. 2** according to an example.

Referencing said **FIG. 5****,** the housing **110** may comprise a cover portion **113** to enable selective access to the interior of the housing **110,** e.g. the at least one battery module **101.** In one example, the first housing part **111** or the second housing part **112** may comprise a cover portion **113** for selectively enabling access to the at least one battery module **101** through the housing **110.** The cover portion **113** may be hinged to enable pivoting movement to enable access to the at least one battery module **101,** slidable to enable to be slid out of the way to enable access to the at least one battery module **101** or removably mounted such that it may be dismounted to enable access to the at least one battery module **101.** In the depicted example, the cover portion **113** forms a part of the first housing part **111.** The cover portion **113** is formed by a removable plate of the first housing part **111.** The first housing part **111** may thus comprise a housing portion and the cover portion **113.** The cover portion **113** may be removably mounted to the housing portion to enable selective access to the interior of the housing **110** and/or the at least one battery module **101.** Preferably, the cover portion **113** may form a side wall of the housing **110,** the side wall being arranged to face away from the frame **56** upon the battery system **100** being mounted to said frame **56.** Preferably, the cover portion **113** may form a side wall of the first housing part **111,** the side wall being arranged to face away from the frame **56** upon the first housing part **111** being mounted to said frame **56.**

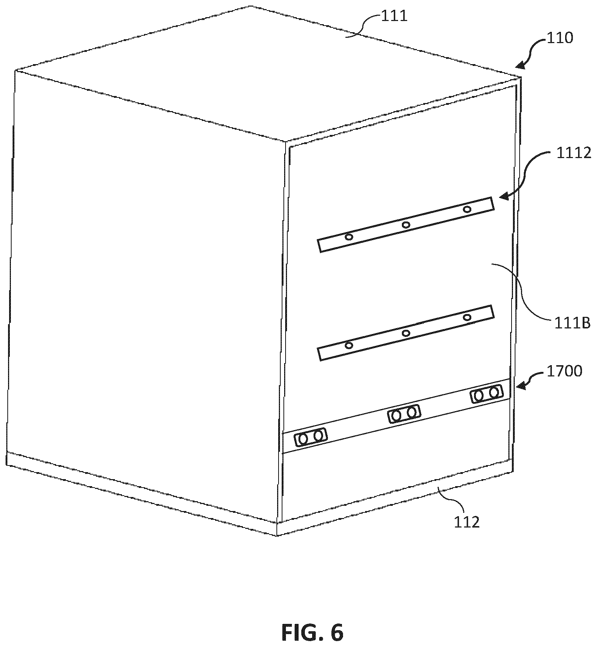

**FIG. 6** depicts the battery system **100** of **FIG. 2** from another angle. As depicted in **FIG. 6****,** the housing **110** may comprise an interface **1700** for electrical connections and/or cooling fluid connections. The interface **1700** may comprise electrical connections configured to electrically connect the at least one battery module **101** to the power system of the vehicle **50.** The interface **1700** may comprise cooling fluid connections configured to connect an internal cooling circuit of the at least one battery module **101** to a cooling system of vehicle **50.**

Further referencing **FIG. 6****,** the frame mounting interface **1112** of the first housing part **111** is visible.

In an example, the frame mounting interface **1112** may be arranged to be accessible from the exterior of the housing **110** such that the first housing part **111** is releasably mountable to the vehicle frame **56** from an external side of the housing **110.**

In an example, the housing mounting interface **1111** may be provided on the first surface **111A** of the first housing part **1111** forming one side of the first housing part **110.** The frame mounting interface **1112** may be provided on a second surface **111B** of the first housing part **111** forming another side of the first housing part **111.** In the depicted example, the second surface **111B** extends substantially orthogonally to the first surface **111A.**

Preferably, the interface **1700** and/or the frame mounting interface **1112** may be provided on a side wall of the housing **110,** the side wall being arranged to face the frame **56** upon the battery system **100** being mounted to said frame **56.** Preferably, the interface **1700** and/or the frame mounting interface **1112** may be provided on a side wall of the first housing part **111,** the side wall being arranged to face away from the frame **56** upon the first housing part **111** being mounted to said frame **56.**

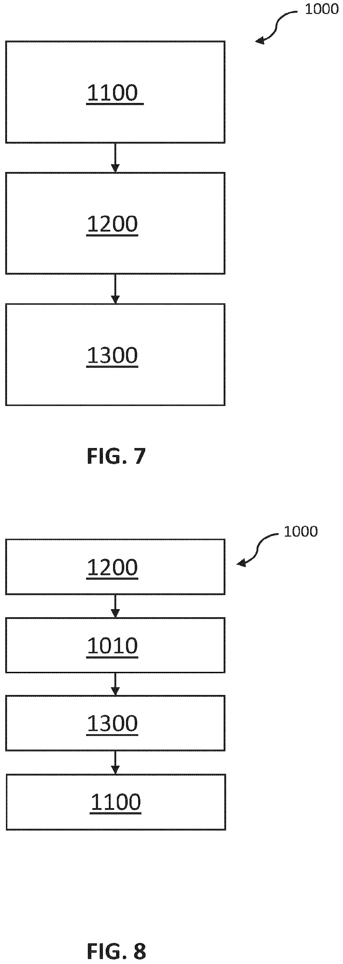

**FIG. 7** depicts a flow chart of a method **1000** for mounting the battery system **100** to the frame **56** of the vehicle **50.** The battery system **100** may be a battery system in accordance with any of the examples described herein.

The method **1000** comprises mounting **1100** the first housing part **111** to the frame 56. The method **1000** further comprises mounting **1200** the at least one battery module **101** to the second housing part **112.** Notably, step **1100** and step **1200** may be performed in any order. Thus, an operator may either mount the first housing part **111** and the second housing part **112** together prior to mounting the formed housing **110** to the frame **56** or mounting the first housing part **111** to the frame **56** and then mounting the second housing part **112** to the first housing part **111** to form the housing **110** and mount the at least one battery module **101** to the frame **56.**

The method **1000** comprises mounting **1300** the second housing part **112** to the first housing part **111** after the mounting **1200** of the at least one battery module **101** to the second housing part **112.**

**FIG. 8** depicts a flow chart of the method **1000** of **FIG. 7** according to a more detailed example. The method **1000** may further comprise mounting the first housing part **111** to the second housing part **112** to form the housing **110.** The method **1000** may further comprise mounting the housing **110** to the frame **56** by mounting **1100** the first housing part **111** to the frame **56.**

In one example, the method **1000** may further comprise positioning **1010** the first housing part **111** above and aligned with the second housing part **112** and mounting the first housing part **111** to the second housing part **112** by moving the first housing part **111** downwards to abut to the second housing part **112.**

Advantageously, the battery system **100** may be mounted to the frame **56** by an operator first mounting **1200** the at least one battery module **101** to the second housing part **112,** optionally by means of the battery mounting interface **1123,** and then positioning the first housing part **1010** above and aligned with the second housing part **112.** The operator may then mount **1300** the first housing part **111** to the second housing part **112** by moving the first housing part **111** downwards to abut to the second housing part **112** and optionally by means of the housing mounting interface **1111** of the first housing part **111** and the second housing part mounting interface **1122.** As a next step, the operator may mount **1100** the first housing part **111,** optionally by means of the frame mounting interface **1112,** to the frame **56,** thereby mounting the battery system **100** to the frame **56.**

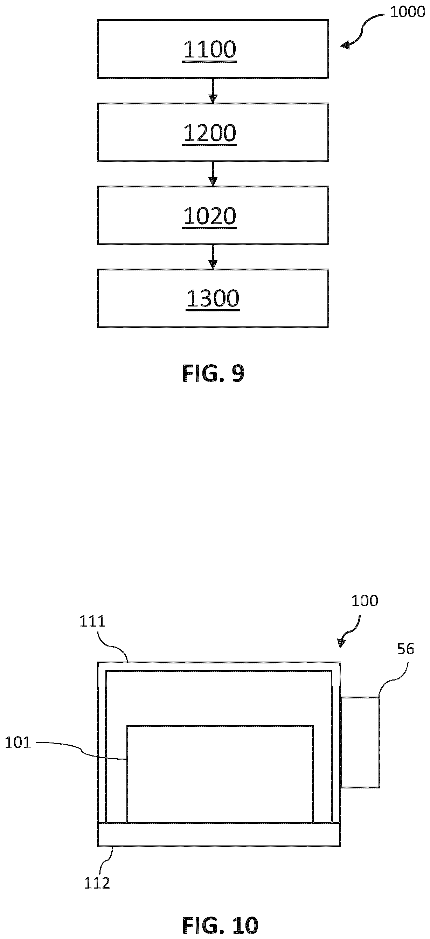

**FIG. 9** depicts a flow chart of the method **1000** of **FIG. 7** according to another more detailed example. The method **1000** may comprise mounting **1100** the first housing part **111** to the frame **56** prior to mounting **1300** the second housing part **112** to the first housing part **111.** The method may further comprise mounting **1300** the second housing part **112** to the first housing part **111** as the first housing part **111** is mounted to the frame **56** to form the housing **111.**

In one example, the method **1000** may further comprise positioning **1020** the second housing part **112** underneath and aligned with the first housing part **111** and mounting the second housing part **112** to the first housing part **111** and mounting the second housing part **112** to the first housing part **111** by moving the second housing part **112** upwards to abut to the first housing part **111.**

Advantageously, the battery system **100** may be mounted to the frame **56** by an operator mounting **1100** the first housing part **111** to the frame **56,** optionally by means of the frame mounting interface **1112** and mounting **1200** the at least one battery module **101** to the second housing part **112,** optionally by means of the battery mounting interface **1123,** in no particular order. The operator may then position **1020** the second housing part **112,** preferably with the at least one battery module **101** mounted to said second housing part **112,** underneath and aligned with the first housing part **111** and mount **1300** the second housing part **112** to the first housing part **111,** by moving the second housing part **112** upwards to abut to the first housing part **111** and optionally by means of the housing mounting interface **1111** of the first housing part **111** and the second housing part mounting interface **1123** of the second housing part **112.**

**FIG. 10** is another view of **FIG. 1****,** according to an example. The battery system **100** is for the vehicle **50.** The battery system comprises the housing **110** and the at least one battery module **101,** wherein the housing **110** is adapted to house the at least one battery module **101.** The housing **110** comprises the first housing part **111** adapted to be mounted to the frame **56** of the vehicle **50,** and the second housing part **112** releasably mountable to the first housing part **111** to house the at least one battery module **101.** The at least one battery module **101** is mounted to said second housing part **112** and the first housing part **111** is adapted to be mounted to the frame **56** such that the at least one battery module **101** is mountable to the frame **56** by mounting of said second housing part **112** to said first housing part **111** and the second housing part **112** is dismountable from the first housing part **111** together with the at least one battery module **101** without dismounting of the first housing part **111** from the frame **56.**

According to an aspect a battery system, vehicle and method is provided according to any of following examples.

Example 1: Battery system (100) for a vehicle (50), the battery system comprising a housing (110) and at least one battery module (101), wherein the housing (110) is adapted to house the at least one battery module (101), wherein the housing (110) comprises a first housing part (111) adapted to be mounted to a frame (56) of the vehicle (50), and a second housing part (112) releasably mountable to the first housing part (111) to house the at least one battery module (101), wherein the at least one battery module (101) is mounted to said second housing part (112) and the first housing part (111) is adapted to be mounted to the frame (56) such that the at least one battery module (101) is mountable to the frame (56) by mounting of said second housing part (112) to said first housing part (111) and the second housing part (112) is dismountable from the first housing part (111) together with the at least one battery module (101) without dismounting of the first housing part (111) from the frame (56).

Example 2: Battery system (100) of example 1, wherein the second housing part (112) forms a bottom part of the housing (110), whereby the at least one battery module (101) are arranged on top of said bottom part.

Example 3: Battery system (100) of example 2, wherein the at least one battery module (101) is dismountable from the frame (56) by dismounting of the second housing part (112) from the first housing part (111) and lowering of the second housing part (112) together with the at least one battery module (101) relative to the first housing part (111).

Example 4: Battery system (100) of any of examples 1-3, wherein the at least one battery module (101) is mounted to the housing (110) solely by means of being mounted to the second housing part (112).

Example 5: Battery system (100) of any of examples 1-4, wherein the first housing part (111) is mounted to an upper surface (1121) of the second housing part (112).

Example 6: Battery system (100) of any of examples 1-5, wherein first housing part (111) comprises a housing mounting interface (1111) adapted to be releasably mounted to the second housing part (112) and a frame mounting interface (1112) adapted to be releasably mounted to the frame (56).

Example 7: Battery system (100) of example 6, wherein the frame mounting interface (1112) is arranged to be accessible from the exterior of the housing (110) such that the first housing part (111) is releasably mountable to the vehicle frame (56) from an external side of the housing (110).

Example 8: Battery system (100) of example 6 or 7, wherein the housing mounting interface (1111) is provided on a first surface (111A) of the first housing part (111) forming one side of the first housing part (110) and the frame mounting interface (1112) is provided on a second surface (111B) of the first housing part (111) forming another side of the first housing part (111).

Example 9: Battery system (100) of any of examples 1-8, wherein the housing (110) comprises an interface (1700) for electrical connections and/or cooling fluid connections.

Example 10: Battery system (100) of any of examples 1-9, wherein the first or second housing cover part (111, 112) comprises a cover portion (113) for selectively enabling access to the at least one battery module (101) through the housing (110).

Example 11: Battery system (100) of any of examples 1-10, wherein the battery system comprises a plurality of battery modules (101) stacked on each other along a stacking axis (A).

Example 12: Battery system (100) of example 1, wherein the second housing part (112) forms a bottom part of the housing (110), whereby the at least one battery module (101) are arranged on top of said bottom part, wherein the at least one battery module (101) is dismountable from the frame (56) by dismounting of the second housing part (112) from the first housing part (111) and lowering of the second housing part (112) together with the at least one battery module (101) relative to the first housing part (111), wherein the at least one battery module (101) is mounted to the housing (110) solely by means of being mounted to the second housing part (112), wherein the first housing part (111) is mounted to an upper surface (1121) of the second housing part (112), and wherein the battery system comprises a plurality of battery modules (101) stacked on each other along a stacking axis (A).

Example 13: Vehicle (50) comprising the battery system (100) of any of examples 1-12.

Example 14: Vehicle (50) of example 13, wherein the vehicle (50) is a heavy-duty vehicle such as a commercial vehicle or a construction vehicle.

Example 15: Vehicle (50) of example 13 or 14, wherein the vehicle (50) comprises an electric propulsion source (51) and wherein the at least one battery module (101) are configured to power said electric propulsion source (51).

Example 16: Method (1000) for mounting a battery system (100) of any of examples 1-12 to a frame (56) of a vehicle (50), the method comprising: mounting (1100) the first housing part (111) to the frame (56), mounting (1200) the at least one battery module (101) to the second housing part (112), and mounting (1300) the second housing part (112) to the first housing part (111) after the mounting (1200) of the at least one battery module (101) to the second housing part (112).

Example 17: Method (1000) of example 16, further comprising mounting (1300) the first housing part (111) to the second housing part (112) to form the housing (110), and mounting the housing (110) to the frame (56) by mounting (1100) the first housing part (111) to the frame (56).

Example 18: Method (1000) of example 17, further comprising positioning (1010) the first housing part (111) above and aligned with the second housing part (112) and mounting the first housing part (111) to the second housing part (112) by moving the first housing part (111) downwards to abut to the second housing part (112).

Example 19: Method (1000) of example 16, further comprising: mounting (1100) the first housing part (111) to the frame (56) prior to mounting (1300) the second housing part (112) to the first housing part (1100), and mounting (1300) the second housing part (112) to the first housing part (111) as the first housing part (111) is mounted to said frame (56) to form the housing (111).

Example 20: Method (1000) of example 19, further comprising positioning (1020) the second housing part (112) underneath and aligned with the first housing part (111) and mounting the second housing part (112) to the first housing part (111) by moving the second housing part (112) upwards to abut to the first housing part (111).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. Battery system (100) for a vehicle (50), the battery system comprising a housing (110) and at least one battery module (101), wherein the housing (110) is adapted to house the at least one battery module (101), wherein the housing (110) comprises:
- a first housing part (111) adapted to be mounted to a frame (56) of the vehicle (50), and
- a second housing part (112) releasably mountable to the first housing part (111) to house the at least one battery module (101),
wherein the at least one battery module (101) is mounted to said second housing part (112) and the first housing part (111) is adapted to be mounted to the frame (56) such that the at least one battery module (101) is mountable to the frame (56) by mounting of said second housing part (112) to said first housing part (111) and the second housing part (112) is dismountable from the first housing part (111) together with the at least one battery module (101) without dismounting of the first housing part (111) from the frame (56).

2. Battery system (100) of claim 1, wherein the second housing part (112) forms a bottom part of the housing (110), whereby the at least one battery module (101) are arranged on top of said bottom part.

3. Battery system (100) of claim 2, wherein the at least one battery module (101) is dismountable from the frame (56) by dismounting of the second housing part (112) from the first housing part (111) and lowering of the second housing part (112) together with the at least one battery module (101) relative to the first housing part (111).

4. Battery system (100) of claim of any of claims 1-3, wherein the first housing part (111) is mounted to an upper surface (1121) of the second housing part (112).

5. Battery system (100) of any of claims 1-4, wherein the first housing part (111) comprises a housing mounting interface (1111) adapted to be releasably mounted to the second housing part (112) and a frame mounting interface (1112) adapted to be releasably mounted to the frame (56).

6. Battery system (100) of claim 5, wherein the frame mounting interface (1112) is arranged to be accessible from the exterior of the housing (110) such that the first housing part (111) is releasably mountable to the vehicle frame (56) from an external side of the housing (110).

7. Battery system (100) of claim 5 or 6, wherein the housing mounting interface (1111) is provided on a first surface (111A) of the first housing part (111) forming one side of the first housing part (110) and the frame mounting interface (1112) is provided on a second surface (111B) of the first housing part (111) forming another side of the first housing part (111).

8. Battery system (100) of any of claims 1-7, wherein the first or second housing cover part (111, 112) comprises a cover portion (113) for selectively enabling access to the at least one battery module (101) through the housing (110).

9. Battery system (100) of any of claims 1-8, wherein the battery system comprises a plurality of battery modules (101) stacked on each other along a stacking axis (A).

10. Battery system (100) of claim 1, wherein the second housing part (112) forms a bottom part of the housing (110), whereby the at least one battery module (101) are arranged on top of said bottom part, wherein the at least one battery module (101) is dismountable from the frame (56) by dismounting of the second housing part (112) from the first housing part (111) and lowering of the second housing part (112) together with the at least one battery module (101) relative to the first housing part (111), wherein the at least one battery module (101) is mounted to the housing (110) solely by means of being mounted to the second housing part (112), wherein the first housing part (111) is mounted to an upper surface (1121) of the second housing part (112), and wherein the battery system comprises a plurality of battery modules (101) stacked on each other along a stacking axis (A).

11. Vehicle (50) comprising the battery system (100) of any of claims 1-10.

12. Vehicle (50) of claim 11, wherein the vehicle (50) comprises an electric propulsion source (51) and wherein the at least one battery module (101) are configured to power said electric propulsion source (51).

13. Method (1000) for mounting a battery system (100) of any of claims 1-10 to a frame (56) of a vehicle (50), the method comprising:
- mounting (1100) the first housing part (111) to the frame (56),
- mounting (1200) the at least one battery module (101) to the second housing part (112), and
- mounting (1300) the second housing part (112) to the first housing part (111) after the mounting (1200) of the at least one battery module (101) to the second housing part (112).

14. Method (1000) of claim 13, further comprising:
- mounting (1300) the first housing part (111) to the second housing part (112) to form the housing (110), and
- mounting the housing (110) to the frame (56) by mounting (1100) the first housing part (111) to the frame (56).

15. Method (1000) of claim 13, further comprising:
- mounting (1100) the first housing part (111) to the frame (56) prior to mounting (1300) the second housing part (112) to the first housing part (1100), and
- mounting (1300) the second housing part (112) to the first housing part (111) as the first housing part (111) is mounted to said frame (56) to form the housing (111).
